Europäisches Patentamt

European Patent Office

Office européen des brevets

(19)

(11) **EP 0 614 555 B1**

(12) **EUROPÄISCHE PATENTSCHRIFT**

(45) Veröffentlichungstag und Bekanntmachung des Hinweises auf die Patenterteilung:
19.06.1996 Patentblatt 1996/25

(21) Anmeldenummer: 92919430.6

(22) Anmeldetag: 11.09.1992

(51) Int Cl.$^6$: **G06T 5/00**

(86) Internationale Anmeldenummer:
PCT/DE92/00770

(87) Internationale Veröffentlichungsnummer:
WO 93/11501 (10.06.1993 Gazette 1993/14)

(54) **VERFAHREN ZUR SEGMENTIERUNG EINES ZUSAMMENHÄNGENDEN GEBIETES MIT DIFFUSER BERANDUNG IN EINEM MONOCHROMEN RASTERBILD**

PROCESS FOR SEGMENTING A CONTINUOUS FIELD WITH DIFFUSE EDGING IN A MONOCHROME SCREEN IMAGE

PROCEDE DE SEGMENTATION D'UNE ZONE CONTINUE A BORD DIFFUS DANS UNE IMAGE-ECRAN MONOCHROME

(84) Benannte Vertragsstaaten:
DE FR GB IT NL

(30) Priorität: 25.11.1991 DE 4138663

(43) Veröffentlichungstag der Anmeldung:
14.09.1994 Patentblatt 1994/37

(73) Patentinhaber: SIEMENS AKTIENGESELLSCHAFT
D-80333 München (DE)

(72) Erfinder: SCHIELEIN, Michael
D-80997 München (DE)

(56) Entgegenhaltungen:
DE-A- 3 334 171

• PATENT ABSTRACTS OF JAPAN vol. 7, no. 87 (P-190)(1232) 12. April 1983 & JP-A-58014281
• PATENT ABSTRACTS OF JAPAN vol. 14, no. 312 (E-948)(4255) 5. Juli 1990 & JP-A-2100575
• PATENT ABSTRACTS OF JAPAN vol. 15, no. 355 (E-1109)(4883) 9. September 1991 & JP-A-31 41 774

**Beschreibung**

Für verschiedene Anwendungen der digitalen Bildverarbeitung, z. B. für Zwecke der Datenreduktion, ist es erforderlich, über geeignete Segmentierungsverfahren für monochrome Bilder zu verfügen. Die meisten bekannten Verfahren verwenden eine Schwelle, um zwischen dem Hintergrund und dem zu segmentierenden Gebiet zu unterscheiden. Das Hauptproblem besteht darin, eine Schwelle zu finden, welche bei einer möglichst großen Anzahl von Bildern zu zufriedenstellenden Segmentierungsergebnissen führt. Hierbei hat es sich als zweckmäßig erwiesen, für bestimmte Klassen von monochromen Bildern speziell angepaßte Segmentierungsverfahren zu verwenden. Eine wichtige Anwendung der Segmentierung von monochromen Bildern besteht in der Segmentierung von Fingerabdrücken, wie sie in der Kriminaltechnik verwendet werden.

DE-A-3 334 171 beschreibt ein Bildverarbeitungsverfahren, bei dem ein Gesamtbild in Blöcke aufgeteilt wird. Schwellwerte entsprechend den repräsentativen Werten für Pixelgruppen innerhalb der Blöcke werden bestimmt.

Der Erfindung liegt die Aufgabe zugrunde, ein Verfahren zur Segmentierung monochromer Rasterbilder anzugeben, welches besonders für die Segmentierung von Fingerabdrücken in monochromen Rasterbildern geeignet ist. Diese Aufgabe wird durch ein Verfahren zur Segmentierung eines zusammenhängenden Gebietes mit diffuser Berandung in einem monochromen Rasterbild mit Merkmalen nach Anspruch 1 gelöst.

In diesem Verfahren wird zunächst ein umschreibendes Rechteck für das zu segmentierende Gebiet ermittelt. In der Mitte dieses umschreibenden Rechtecks wird ein Fenster gewählt, über dessen Bildpunkte die Bildintensität ermittelt wird. Aus der auf diese Weise ermittelten mittleren Bildintensität wird eine erste Schwelle berechnet. Alle Blöcke aus Bildpunkten, in denen mindestens ein Bildpunkt eine Intensität unterhalb dieser Schwelle aufweist, werden markiert. Dieses Verfahren hat sich in Experimenten mit Bildern von Fingerabdrücken als besonders geeignet zur Segmentierung solcher Fingerabdrücke erwiesen. Eine fehlerhafte

Segmentierung außerhalb des Fingerabdrucks konnte vermieden werden, indem eine Schwelle durch Mittelung der Bildintensität über die Bildpunkte eines Fensters im Innern eines umschreibenden Rechtecks ermittelt wurde.

Vorteilhafte Weiterbildungen der Erfindung ergeben sich aus den Unteransprüchen.

Figur 1 zeigt einen zu segmentierenden Fingerabdruck.

Figur 2 zeigt das Ergebnis der Segmentierung mit Hilfe des erfindungsgemäßen Verfahrens, angewendet auf den Fingerabdruck aus Figur 1.

Die Erfindung wird im folgenden anhand eines bevorzugten Ausführungsbeispiels weiter beschrieben.

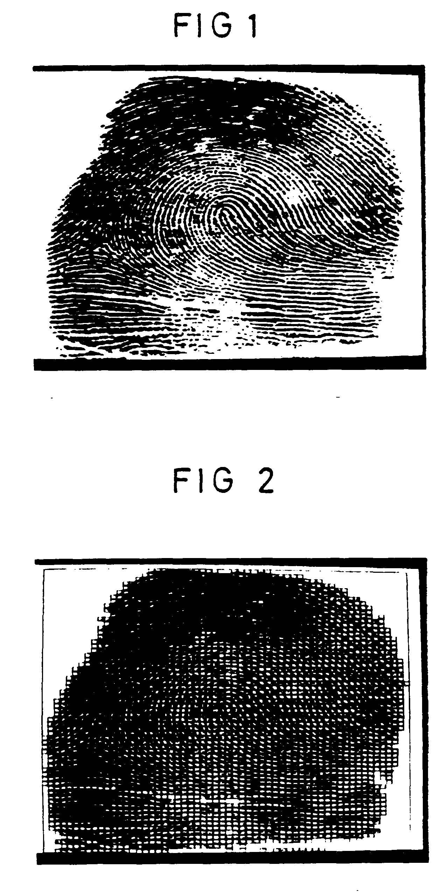

Digitalisierte Rasterbilder bestehen üblicherweise aus einer Matrix von Bildpunkten, z. B. 512 x 512, und sind z. B. mit Auflösungen zwischen 400 oder 500 Punkten pro Zoll gescanned worden. Jeder Bildpunkt besitzt eine Bildintensität die üblicherweise z. B. mit acht Bits entsprechend einer Auflösung zwischen 0 und 255 dargestellt wird. Figur 1 zeigt einen digitalisierten Fingerabdruck, wie er z. B. mit Hilfe eines solchen Verfahrens gewonnen wird.

Erfindungsgemäß wird nun zunächst ein umschreibendes Rechteck R des zu segmentierenden Gebietes bzw. Fingerabdrucks ermittelt. Dies geschieht besonders vorteilhaft, indem ausgehend von der ersten Zeile des Rasterbildes diejenige Zeile mit dem niedrigsten Zeilenindex gesucht wird, in welcher mindestens T Bildpunkte eine Intensität unterhalb einer vorgegebenen Schwelle T2 aufweisen. Hierbei ist T eine vorgegebene Zahl; in experimentellen Untersuchungen des erfindungsgemäßen Verfahrens wurde gefunden, daß für T vorteilhaft die Zahl 2 gewählt wird. Anschließend wird ausgehend von der letzten Zeile des Rasterbildes diejenige Zeile mit dem höchsten Zeilenindex gesucht, in welcher mindestens T Bildpunkte eine Intensität unterhalb der Schwelle T2 aufweisen. Entsprechend wird mit den Spalten des Rasterbildes verfahren, wobei zunächst diejenige Spalte mit dem niedrigsten Spaltenindex und daraufhin diejenige Spalte mit dem höchsten Spaltenindex ermittelt wird, in welcher mindestens T Bildpunkte eine Intensität unterhalb einer Schwelle T2 aufweisen. Bei experimentellen Untersuchungen des erfindungsgemäßen Verfahrens hat sich herausgestellt, daß für die Schwelle T2 vorteilhaft das $\frac{137}{255}$-fache der maximalen Intensität gewählt wird.

Nachdem das umschreibende Rechteck R ermittelt ist, wird in dessen Mitte ein Fenster gewählt, über dessen Bildpunkte eine mittlere Bildintensität aus den Intensitäten aller in diesem Fenster enthaltenen Bildpunkte ermittelt wird. Experimente mit dem erfindungsgemäßen Verfahren haben gezeigt, daß es besonders vorteilhaft ist, die Größe des Fensters zu 32 x 32 Bildpunkten zu wählen. Aus dieser so ermittelten mittleren Bildintensität wird eine weitere Schwelle T1 berechnet. Dies geschieht vorzugsweise, in dem man die mittlere Bildintensität mit dem Faktor 1,1 multipliziert und diesen Wert für die Schwelle T1 wählt, so lange der so ermittelte Wert nicht größer ist als das $\frac{160}{255}$ -fache der maximalen Bildintensität. Überschreitet dagegen das 1,1-fache der mittleren Bildintensität diesen Wert, so ist es vorteilhaft, das $\frac{160}{255}$ -fache der maximalen Bildintensität als Wert der Schwelle T1 zu wählen.

Nachdem die Schwelle T1 bestimmt wurde, werden alle Blöcke aus n x n Bildpunkten, in denen mindestens ein Bildpunkte eine Intensität unterhalb der Schwelle T1 aufweist, markiert. Hierbei wird n vorzugsweise gleich 8 gewählt.

Die angegebenen Werte für Blöcke und Fenster erhöhen sich gegebenenfalls entsprechend, falls die Größe des Rasterbildes wesentlich vergrößert oder verkleinert wird.

Bei monochromen Bildern, bei denen der Hintergrund dunkler als das zu segmentierende Gebiet ist, treten anstelle von Bildpunkten unterhalb einer der jeweiligen Schwellen vorteilhaft Bildpunkte oberhalb dieser jeweiligen Schwellen.

Das Verfahren kann sehr vorteilhaft in Verbindung mit einem Verfahren zur Datenkompression von. Bilddaten zur Verringerung des benötigten Speicherplatzes bei der Speicherung derartiger Bilder auf magnetischen Speichermedien eingesetzt werden. Vorzugsweise wird für solche Zwecke der Kompressionsalgorithmus verwendet, welcher von der Joint Photographic Experts Group (JPEG) vorgeschlagen wurde. Durch eine Segmentierung von Fingerabdrücken läßt sich auf einfache Weise eine weitergehende Datenreduktion erreichen, indem nur der segmentierte Fingerabdruck und nicht das gesamte Bild komprimiert werden muß. Auf der anderen Seite lassen sich Qualitätsverbesserungen erzielen, wenn die Menge der komprimierten Daten konstant gehalten wird. Das erfindungsgemäße Verfahren eignet sich besonders für die Berechnung eines Qualitätsmaßes zur Anwendung in dem JPEG Kompressionsverfahren. Dieses Qualitätsmaß gibt eine obere Grenze für den Kompressionsfaktor innerhalb des zu kodierenden Bildes an und kann vor dem eigentlichen Kompressionsalgorithmus mit Hilfe des erfindungsgemäßen Verfahrens ermittelt werden.

**Patentansprüche**

1. Verfahren zur Segmentierung eines zusammenhängenden Gebietes mit diffuser Berandung in einem monochromen Rasterbild mit den folgenden Schritten gekennzeichnet:

   a) Es wird ein umschreibendes Rechteck (R) des zu segmentierenden Gebietes ermittelt, wobei das umschreibende Rechteck (R) gebildet wird aus den zwei Zeilen des Rasterbildes mit niedrigstem bzw. höchstem Zeilenindex, sowie aus den zwei Spalten des Rasterbildes mit niedrigstem bzw. höchstem Spaltenindex, in welchen mindestens T Bildpunkte eine Intensität unterhalb einer zweiten Schwelle (T2) aufweisen, wobei T eine vorgegebene, wählbare Zahl ist;
   b) in der Mitte dieses umschreibenden Rechteckes (R) wird ein Fenster (F) wählbarer Größe gewählt, über dessen Bildpunkte die Bildintensität gemittelt wird;
   c) aus der mittleren Bildintensität wird eine erste Schwelle (T1) berechnet, wobei die erste Schwelle (T1) aus der mittleren Intensität (IM) berechnet wird nach der Formel

   $$T1 = \max\left(\frac{160}{255} \, Imax,\ 1{,}1 \cdot IM\right),$$

   wobei Imax die maximale Intensität bedeutet;

   d) alle Blöcke aus n x n Bildpunkten, wobei n eine vorgegebene Blockgröße ist, in denen mindestens ein Bildpunkt eine Intensität unterhalb der ersten Schwelle (T1) aufweist, werden markiert.

2. Verfahren nach Anspruch 1, bei dem die Blöcke aus 8 x 8 Bildpunkten bestehen und das Fenster aus 32 x 32 Bildpunkten besteht.

3. Verfahren nach Anspruch 1 oder 2, bei dem anstelle von Bildpunkten unterhalb einer der jeweiligen Schwellen Bildpunkte oberhalb der jeweiligen Schwellen verwendet werden.

4. Verfahren nach einem der vorhergehenden Ansprüche, bei dem T = 2 und

   $$T2 = \frac{137}{255} \, Imax$$

   ist, und Imax die maximale mögliche Intensität bedeutet.

**Claims**

1. Process for segmenting a contiguous region with diffuse boundary in a monochrome raster image, characterized by the following steps:

   a) a framing rectangle (R) of the region to be segmented is determined, the framing rectangle (R) being formed from the two lines of the raster image having the lowest and respectively highest line index, as well as from the two columns of the raster image having the lowest and respectively highest column index, in which at least T image points exhibit an intensity below a second threshold (T2), where T is a predetermined, selectable number;
   b) at the centre of this framing rectangle (R) a window (F) of selectable size is selected, over the image points of which the image intensity is averaged;
   c) a first threshold (T1) is calculated from the average image intensity, the first threshold (T1) being calculated from the average intensity (IM) in accordance with the formula

   $$T1 = \max\left(\frac{160}{255} \, Imax,\ 1.1 \cdot IM\right)$$

   where Imax signifies the maximum intensity;
   d) all blocks of n x n image points, where n is a predetermined block size, in which at least one image point exhibits an intensity below the first threshold (T1) are marked.

2. Process according to Claim 1, in which the blocks comprise 8 x 8 image points and the window comprises 32 x 32 image points.

**3.** Process according to Claim 1 or 2, in which image points above the respective thresholds are used in place of image points below one of the respective thresholds.

**4.** Process according to one of the preceding claims, in which T = 2 and

$$T2 = \frac{137}{255}\, Imax,$$

and Imax signifies the maximum possible intensity.

$$T2 = \frac{137}{255}\, Imax,$$

et Imax représente l'intensité maximale possible.

## Revendications

**1.** Procédé de segmentation d'une zone continue à bords diffus dans une image-écran monochrome, caractérisé par les étapes suivantes :

a) on détermine un rectangle (R) de circonscription de la zone à segmenter, le rectangle (R) de circonscription étant formé par les deux lignes de l'image-écran ayant l'indice de ligne le plus bas resp. le plus élevé ainsi que par les deux colonnes de l'image-écran ayant l'indice de colonne le plus bas resp. le plus élevé, dans lesquelles au moins T points d'image ont une intensité inférieure à un second seuil (T2), T étant un nombre prédéterminé que l'on peut choisir ;

b) on choisit, au centre de ce rectangle (R) de circonscription, une fenêtre (F) dont on peut choisir la grandeur, dont les points d'image servent à faire la moyenne de l'intensité d'image;

c) on calcule, à partir de l'intensité d'image moyenne, un premier seuil (T1), le premier seuil (T1) étant calculé, à partir de l'intensité moyenne (IM), selon la formule

$$T1 = \max\left(\frac{160}{255}\, Imax,\ 1{,}1 \cdot IM\right),$$

Imax étant l'intensité maximale;

d) tous les blocs formés par n x n points d'image, n étant une grandeur de bloc prédéterminée, dans lesquels au moins un point d'image a une intensité inférieure au premier seuil (T1), sont marqués.

**2.** Procédé selon la revendication 1, dans lequel les blocs sont formés par 8 x 8 points d'image et la fenêtre est formée par 32 x 32 points d'image.

**3.** Procédé selon la revendication 1 ou 2, avec lequel on utilise, à la place de points d'image au-dessous de l'un des seuils respectifs, des points d'image au-dessus des seuils respectifs.

**4.** Procédé selon l'une des revendications précédentes, dans lequel on a T = 2 et

# FIG 1

# FIG 2